# EUROPEAN PATENT APPLICATION

(11) **EP 4 443 390 A1**
(43) Date of publication of application: **09.10.2024**
(21) Application number: 23812122.2
(22) Date of filing: 23.05.2023
(51) Int. Cl.: G06T 11/60, G06T 11/00, G06T 11/40, G06F 30/12

(54) **METHOD FOR SIMULATING TEXTURE IMAGE AND DEVICE THEREFOR**

(30) Priority: 23.05.2022 KR 20220062946
(71) Applicant: CLO Virtual Fashion Inc., Seoul 06236 (KR)
(72) Inventor: HAM, Hyung Gi, Seoul 06236 (KR); HAN, Hyo Sup, Seoul 06236 (KR)
(74) Representative: Gill Jennings & Every LLP
(86) International application number: PCT/KR2023/007019
(87) International publication number: WO 2023/229348

(57) **Abstract**

A simulation method for editing a texture of a garment may include displaying a two-dimensional (2D) canvas corresponding to a basic region of the texture, displaying a 2D texture image on the canvas, receiving a first user input for repeating and displaying the texture image on the canvas, determining an interval parameter between the texture images based on the first user input, a size of the canvas, and a size of the texture image, and displaying the texture images on the canvas based on the determined interval parameter.

## Description

### Technical Field

The following embodiments relate to a method and apparatus for simulating a texture image.

### Background Art

Garments may feature regular patterns or designs. In a garment simulation, these patterns or designs may be represented as textures, which are stored as data in basic units known as tiles. To enhance a garment simulation, there is a need for techniques that enable the flexible editing and generation of repeating patterns included in texture tiles.

### Disclosure of the Invention

### Technical Solutions

According to an embodiment, a simulation method for editing a texture of a garment may include displaying a two-dimensional (2D) canvas corresponding to a basic region of the texture, displaying a 2D texture image on the canvas, receiving a first user input for repeating and displaying the texture image on the canvas, determining an interval parameter between texture images based on the first user input, a size of the canvas, a size of the texture image, and displaying the texture images on the canvas based on the determined interval parameter.

The method may further include applying and displaying a texture based on the canvas onto a 3D garment.

The method may further include reflecting and displaying a texture based on the canvas onto a 3D garment in real time.

The first user input may include at least one of a first iteration count of repeating the texture image within the canvas in a predetermined first direction and a second iteration count of repeating the texture image within the canvas in a predetermined second direction.

The determining of the interval parameter may include at least one of, when the first iteration count is input, determining an interval parameter in the first direction based on the size of the canvas in the first direction, the size of the texture image in the first direction, and the first iteration count and, when the second iteration count is input, determining an interval parameter in the second direction based on the size of the canvas in the second direction, the size of the texture image in the second direction, and the second iteration count.

The determining of the interval parameter may include calculating a distance to evenly distribute a plurality of texture images within the canvas based on the first user input.

The method may further include determining whether the interval parameter is to be a negative number and adding the texture image to both ends of a plurality of texture images based on the first user input based on a determination that the interval parameter is to be a negative number.

The method may further include receiving an input for modifying the size of the texture image displayed on the canvas and updating the interval parameter based on the modified size.

The method may further include receiving an input for rotating the texture image displayed on the canvas and updating the size of the rotated texture image, and updating the interval parameter based on the updated size.

The method may further include receiving a second user input for shifting a pattern in which the texture images are repeated and determining a shift parameter of the pattern based on the first user input, the second user input, the size of the texture image, and the interval parameter.

The displaying of the texture images on the canvas may include displaying the texture images on the canvas based on the determined interval parameter and the determined shift parameter.

The second user input may include at least one of a first shift index for adjusting a degree of shifting a repeating pattern within the canvas in a predetermined first direction and a second shift index for adjusting a degree of a repeating pattern within the canvas in a predetermined second direction.

The determining of the shift parameter may include at least one of, when the first shift index is input, determining a shift parameter in the first direction based on an iteration count in the second direction included in the first user input, the size of the texture image in the first direction, an interval parameter in the first direction, and the first shift index and, when the second shift index is input, determining a shift parameter in the second direction based on an iteration count in the first direction included in the first user input, the size of the texture image in the second direction, an interval parameter in the second direction, and the second shift index.

The first shift index may be set smaller than an iteration count in the second direction included in the first user input, and the second shift index may be set less than an iteration count in the first direction included in the first user input.

The method may further include displaying an interfacing object for moving, scaling, and/or rotating a repeating pattern as a whole included in the canvas and moving, scaling, and/or rotating the repeating pattern as a whole included in the canvas and displaying the repeating pattern in response to a user input through the interfacing object.

According to an embodiment, a simulation apparatus may include a memory configured to store a computer program for executing a simulation method for editing a texture of a garment, a display, and at least one processor configured to display a 2D canvas corresponding to a basic region of the texture, control the display to display a 2D texture image, receive a first user input for repeating and displaying the texture image on the canvas, determine an interval parameter between texture images based on the first user input, the size of the canvas, and the size of the texture image, and control the display to display the texture images on the canvas based on the determined interval parameter.

The first user input may include at least one of a first iteration count of repeating the texture image within the canvas in a predetermined first direction and a second iteration count of repeating the texture image within the canvas in a predetermined second direction.

The at least one processor may be configured to, when the first iteration count is input, determine an interval parameter in the first direction based on the size of the canvas in the first direction, the size of the texture image in the first direction, and the first iteration count and, when the second iteration count is input, determine an interval parameter in the second direction based on the size of the canvas in the second direction, the size of the texture image in the second direction, and the second iteration count.

The at least one processor may be configured to receive a second user input for shifting a pattern in which the texture images are repeated, determine a shift parameter of the pattern based on the first user input, the second user input, and the size of the texture image, and control the display to display the texture images on the canvas based on the determined interval parameter and the determined shift parameter.

The second user input may include at least one of a first shift index for adjusting a degree of shifting a repeating pattern within the canvas in a predetermined first direction and a second shift index for adjusting a degree of shifting the repeating pattern within the canvas in a predetermined second direction.

The at least one processor may be configured to, when the first shift index is input, determine a shift parameter in the first direction based on an iteration count in the second direction included in the first user input, the size of the texture image in the first direction, and the first shift index and a shift parameter and, when the second shift index is input, determine a shift parameter in the second direction based on an iteration count in the first direction included in the first user input, the size of the texture image in the second direction, and the second shift index.

### Brief Description of Drawings

FIG. 1 is a flowchart illustrating a simulation method according to an embodiment.
FIG. 2 illustrates a method of generating a repeating texture image, according to an embodiment.
FIGS. 3 to 5 schematically illustrate examples in which a texture image is repeated and generated according to an embodiment.
FIGS. 6 and 7 illustrate a method of running a simulation by applying rotation according to an embodiment.
FIGS. 8 to 10 schematically illustrate simulation examples in which a texture image is repeated and generated when an interval parameter is a negative number according to an embodiment.
FIGS. 11 to 15 schematically illustrate simulation examples in which a texture image is repeated and generated by applying a shift according to an embodiment.
FIG. 16 is a schematic example illustrating a texture image transform function according to an embodiment.
FIG. 17 is a block diagram illustrating an electronic apparatus according to an embodiment.

### Best Mode for Carrying Out the Invention

The specific structural or functional descriptions provided in this specification are merely examples for illustrating embodiments based on technical concepts. The embodiments may be implemented in various other forms, and are not limited to the embodiments described in this specification.

Although terms of "first" or "second" are used to explain various components, the components are not limited to the terms. These terms should be used only to distinguish one component from another component. For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", "directly between", "neighboring", or "directly neighboring", etc., should be interpreted to be alike.

The singular forms "a", "an", and "the" are intended to include the plural forms as well, unless the context clearly indicates otherwise. It will be further understood that the terms "comprises/comprising" and/or "includes/including," when used herein, specify the presence of stated features, integers, steps, operations, elements, components, or combinations thereof, but do not preclude the presence or addition of one or more other features, integers, steps, operations, elements, components, or groups thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, embodiments will be described in detail with reference to the accompanying drawings. In the drawings, the same reference numerals refer to the same elements.

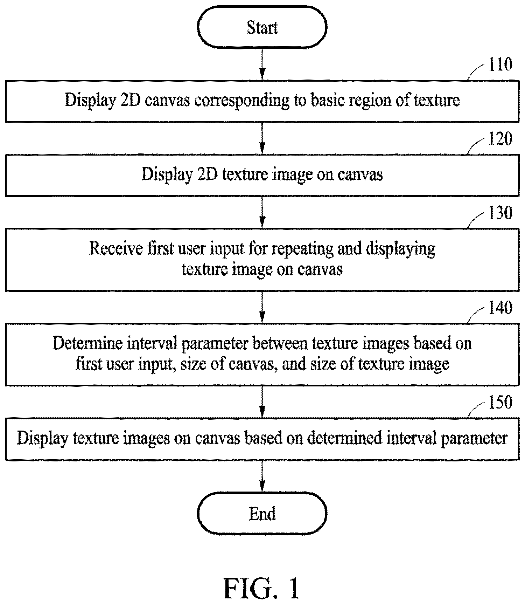

FIG. 1 is a flowchart illustrating a simulation method according to an embodiment.

Although operations of FIG. 1 may be performed in the illustrated order and manner therein, the order of some of the operations may change or some of the operations may be omitted, without departing from the spirit and scope of the illustrated example. The operations illustrated in FIG. 1 may be performed in parallel or simultaneously.

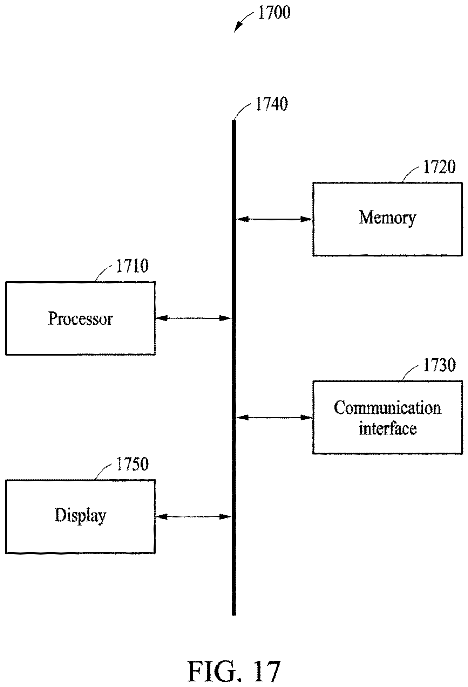

In operation 110, a simulation apparatus (e.g., an electronic apparatus 1700 of FIG. 17) according to an embodiment may display a two-dimensional (2D) canvas corresponding to a basic region of a texture. The simulation apparatus may be implemented as various types of products such as a personal computer (PC), a laptop computer, a tablet computer, a smartphone, a wearable apparatus, a crowd computer, and Software as a Service (SaaS). The canvas may be a region in garment simulation that depicts a tile, which is a basic region of a texture.

In operation 120, the simulation apparatus according to an embodiment may display a 2D texture image on the canvas. The texture image is visual data that is the foundation of a repeating pattern and may include, for example, a logo, a design, a figure, a graphic, and the like.

In operation 130, the simulation apparatus according to an embodiment may receive a first user input for repeating and displaying the texture image on the canvas.

The first user input may include at least one of a first iteration count of repeating the texture image within the canvas in a predetermined first direction and a second iteration count of repeating the texture image within the canvas in a predetermined second direction. Here, the first direction may correspond to an x-axis direction of the canvas and the second direction may correspond to a y-axis direction of the canvas.

In operation 140, the simulation apparatus according to an embodiment may determine an interval parameter between texture images based on the first user input, the size of the canvas, and the size of the texture image.

The simulation apparatus may calculate a distance to evenly distribute a plurality of texture images within the canvas according to the first user input.

For example, when the first iteration count is input, the simulation apparatus may determine an interval parameter in the first direction based on the size of the canvas in the first direction, the size of the texture image in the first direction, and the first iteration count.

In addition, when the second iteration count is input to the simulation apparatus, the simulation apparatus may determine an interval parameter in the second direction based on the size of the canvas in the second direction, the size of the texture image in the second direction, and the second iteration count.

According to an embodiment, the simulation apparatus may determine whether the interval parameter is to be a negative number. Based on a determination that the interval parameter is to be a negative number, the simulation apparatus may add a texture image at both ends of the plurality of texture images.

For simulating the application of a texture of a garment, the same tiles may be arranged in upward, downward, leftward, rightward, and diagonal directions based on a tile expressed by the canvas. In this case, a repeating pattern may need to be continuously expressed between adjacent tiles in all directions. In order to satisfy this condition, when the interval parameter is determined to be a negative number, the simulation apparatus may add at least one texture image at both ends of the plurality of texture images and the number of texture images to be added may vary depending on the ratio between the size of the texture image and the interval parameter.

According to an embodiment, the simulation apparatus may receive a second user input for shifting a pattern in which texture images are repeated. For example, as the texture images are repeated in the x-axis direction and y-axis direction within the canvas, a repeating pattern including rows and columns may be formed. In this case, the simulation apparatus may shift a starting point of the pattern between adjacent rows or shift the starting point of the pattern between adjacent columns.

The simulation apparatus may determine a shift parameter of the pattern based on the first user input, the second user input, the size of the texture image, and the interval parameter. The simulation apparatus may divide a basic distance of the repeating pattern, which is defined by the size of the texture image and the interval parameter, based on an iteration count according to the first user input and shift the starting point of the pattern for the next row or column by a divided distance specified by the second user input among the multiple divided distances.

The second user input may include at least one of a first shift index for adjusting the degree of shifting the repeating pattern within the canvas in the predetermined first direction and a second shift index for adjusting the degree of shifting the repeating pattern within the canvas in the predetermined second direction. The first shift index may be set less than an iteration count in the second direction included in the first user input. The second shift index may be set less than an iteration count in the first direction included in the first user input.

For example, when the first shift index is input to the simulation apparatus, the simulation apparatus may determine a shift parameter in the first direction based on the iteration count in the second direction included in the first user input, the size of the texture image in the first direction, the interval parameter in the first direction, and the first shift index.

Alternatively, when the second shift index is input, the simulation apparatus may determine a shift parameter in the second direction based on the iteration count in the first direction included in the first user input, the size of the texture image in the second direction, the interval parameter in the second direction, and the second shift index.

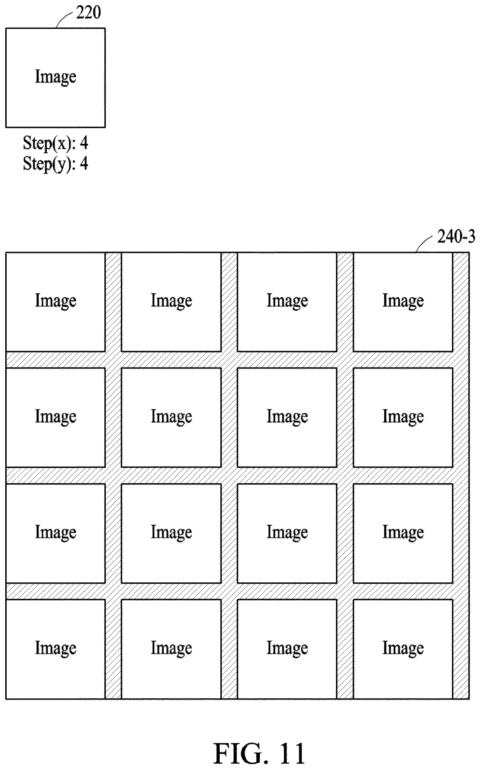

A method of determining a shift parameter is described in detail with reference to FIGS. 11 to 15.

According to an embodiment, the simulation apparatus may receive an input for modifying the size of the texture image displayed on the canvas. The simulation apparatus may update the interval parameter based on the modified size.

Alternatively, the simulation apparatus may receive an input for rotating the texture image displayed on the canvas. The simulation apparatus may modify the size of the rotated texture image. The simulation apparatus may update the interval parameter based on the modified size.

In operation 150, the simulation apparatus according to an embodiment may display texture images on the canvas based on the determined interval parameter. The simulation apparatus may display the texture images on the canvas based on the determined interval parameter and/or the determined shift parameter.

The simulation apparatus according to an embodiment may apply and display a texture based on the canvas onto a 3D garment. As exemplified in detail below, the simulation apparatus may display a texture editing interface through the canvas on one region of a display and display a simulation interface of the 3D garment to which a tile corresponding to the canvas is applied as a texture on another region of the display. In addition, when texture editing through the canvas is performed on the one region of the display by a selection input of the user, the simulation apparatus may display in real time a result of the texture editing performed on the 3D garment displayed on the other region of the display.

The simulation apparatus according to an embodiment may display an interfacing object for moving, scaling and/or rotating the repeating pattern as a whole included in the canvas. The simulation apparatus may move, scale, and/or rotate the repeating pattern as a whole included in the canvas and display the repeating pattern in response to a user input through the interfacing object.

When an individual texture image is edited (moved, scaled, and/or rotated) in the above-described embodiments, the simulation apparatus may update the repeating pattern by updating the interval parameter and/or the shift parameter. On the other hand, when an editing input is received through the interfacing object, the simulation apparatus may consider a predetermined repeating pattern to be a single image and edit (move, scale, and/or rotate) the predetermined repeating pattern as a whole instead of editing the individual texture image.

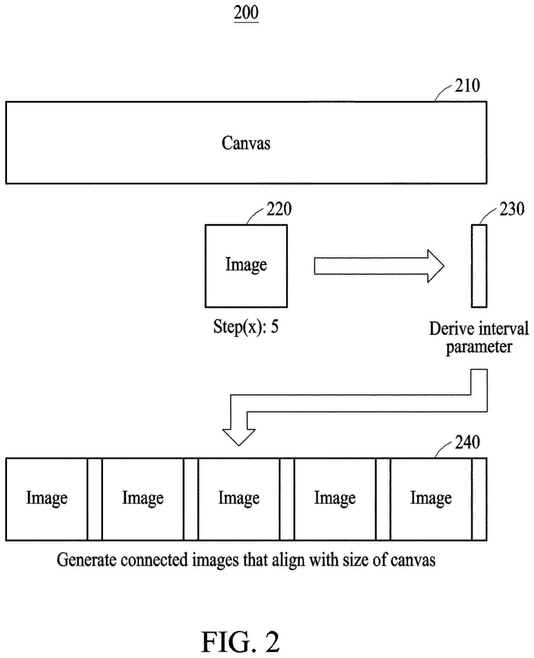

FIG. 2 illustrates a method of generating a repeating texture image, according to an embodiment.

The description provided with reference to FIG. 1 may apply to FIG. 2, and any repeated description related thereto may be omitted. In FIG. 2, one or more blocks and a combination thereof may be implemented by a special-purpose hardware-based computer that performs a predetermined function, or a combination of computer instructions and special-purpose hardware.

Referring to FIG. 2, a processor 1710 (shown in FIG. 17) may simulate a canvas 210, a texture image 220 (hereinafter, referred to as the image 220), and an image 240 to which an iteration count is applied in a 3D virtual space 200. In addition, the processor 1710 may derive an interval parameter 230 based on a first user input.

The processor 1710 may set a first direction as an x-axis direction and a second direction as a y-axis direction. The first user input may include a first iteration count (Step(x)) and a second iteration count (Step(y)). Step(x) may be the number of images 220 repeated in a single row (x-axis), and Step(y) may be the number of images 220 repeated in a single column (y-axis). For example, Step(x): 5 may be a command that generates an image such that the image 220 is repeated five times in the x-axis direction (meaning the image is repeated five times in a single row). In another example, Step(y): 5 may be a command that generates an image such that the image 220 is repeated five times in the y-axis direction (meaning the image is repeated five times in a single column).

The processor 1710 may determine an interval parameter in the first direction (x-axis direction) according to Equation 1 below. [Width of canvas - (Width of image * first iteration count)] / First iteration count = Internal parameter in the first direction

The processor 1710 may determine an interval parameter in the second direction (y-axis direction) according to Equation 2 below. [Height of canvas - (Height of image * second iteration count)] / Second iteration count = Internal parameter in the second direction

The processor 1710 may receive an input according to the first user input to repeat the image 220 in the first direction (x-axis direction). When receiving the first user input of Step(x): 5, the processor 1710 may determine the interval parameter 230 in the first direction based on the first user input, the size of the canvas, and the size of the texture image.

It is assumed that the processor 1710 receives the input to repeat the image 220 five times in the x-axis direction (Step(x): 5). Assuming that the width of the canvas (the length of the canvas in the x-axis direction) is 20 and the width of the image 220 (the length of the canvas in the x-axis direction) is 3, applying these values to Equation 1 yields [20-(3*5)]/5=1. Thus, the interval parameter in the first direction is 1. Even if the processor 1710 receives an input to repeat the image in the y-axis direction (Step(y)), the aforementioned method may still be used to determine the interval parameter in the second direction in the same way in Equation 2 as the method is used with Equation 1.

After determining the interval parameter 230, the processor 1710 may generate the image 240 to which the iteration count is applied. The image 240 to which the iteration count is applied is generated by applying the interval parameter to the right side of the image but is not limited to the illustrated embodiment and may also be generated by applying the interval parameter to the left side of the image. In addition, the embodiment illustrated in FIG. 2 represents the image generated by applying only Step(x), but it may be possible to generate an image to which an iteration count is applied by applying an interval parameter above and/or below the image to which Step(y) is applied.

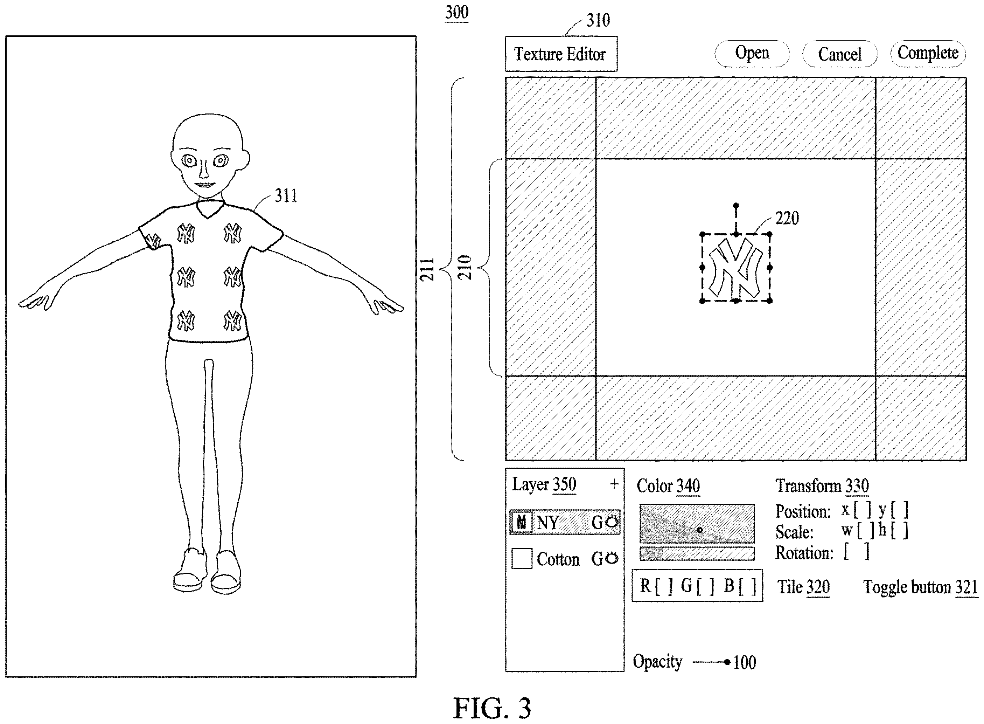

FIGS. 3 to 5 schematically illustrate examples in which a texture image is repeated and generated according to an embodiment.

In FIGS. 3 to 5, one or more blocks and a combination thereof may be implemented by a special-purpose hardware-based computer that performs a predetermined function, or a combination of computer instructions and special-purpose hardware.

The description provided with reference to FIGS. 1 and 2 may apply to FIGS. 3 to 5, and thus, any repeated description related thereto may be omitted. Those described with the same reference numerals as those of FIGS. 1 and 2 have the same meaning as the same components but are not limited to the described embodiments.

Referring to FIGS. 3 to 5, the processor 1710 may display a texture editor 310 in a 3D virtual space 300. The texture editor 310 may include the canvas 210, the image 220, and a Tile function 320. According to an embodiment, the texture editor 310 may further include at least one of a Transform function 330, a Color function 340, and a Layer function 350. Furthermore, the texture editor 310 may provide an expanded canvas 211 that shows, as an example, a portion extending beyond the size of the canvas 210, the size being set by a user.

A tile refers to a basic region of a texture and may be a quadrangular region used to display a 2D canvas.

The processor 1710 may run a simulation by applying a texture modified according to the texture editor 310 to a 3D garment 311 in the 3D virtual space 300.

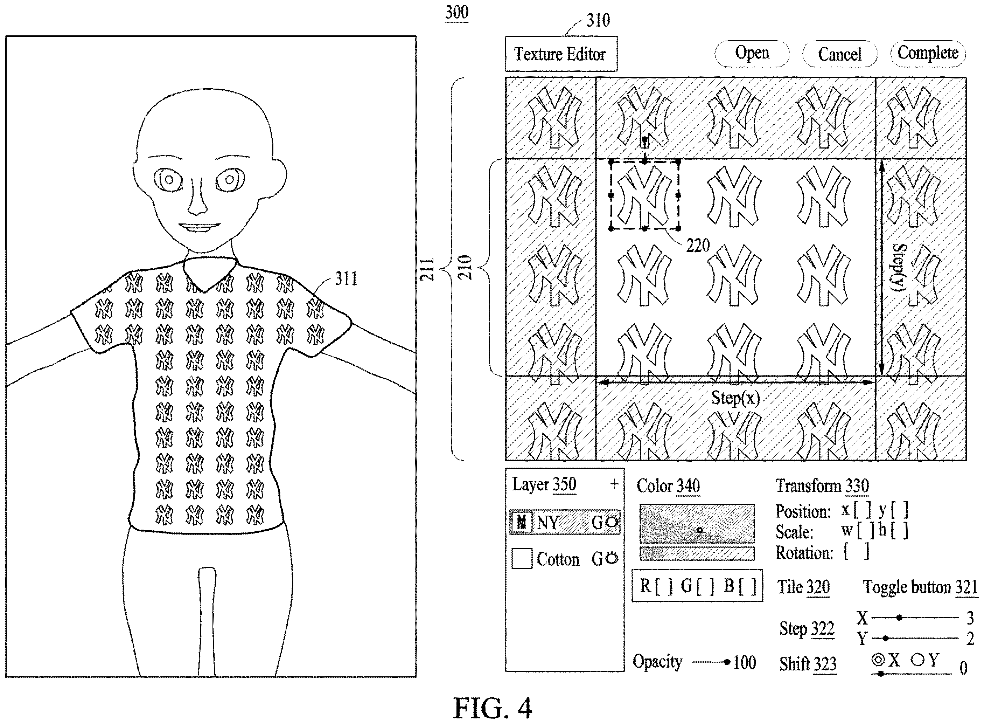

Referring to FIGS. 3 and 4 together, the processor 1710 may receive a selection input of the user for a toggle button 321 of the tile function 320 and display a Step function 322 and a Shift function 323 on the texture editor. However, it is not necessary for the Step function 322 and the Shift function 323 to be displayed solely based on the input of the toggle button 321, and these functions may be displayed continuously.

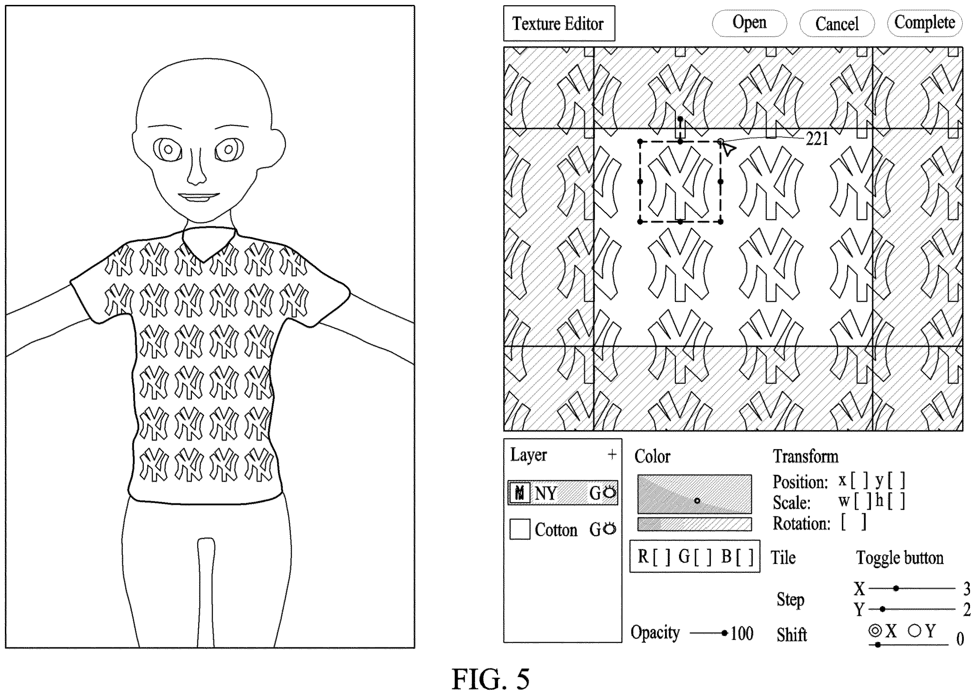

Referring to FIGS. 4 and 5 together, the Step function 322 may display Step(x), which receives an input for a first iteration count for an x-axis and Step(y), which receives an input for a second iteration count for a y-axis.

For example, when the processor 1710 receives an input of 3 for Step(x) and 3 for Step(y) regarding the image 220 displayed on the canvas 210, the first iteration count is 3 and the second iteration count is 3. The processor 1710 may determine a first interval parameter and a second interval parameter based on the received first iteration count and second iteration count. When the first interval parameter and the second interval parameter are determined, as illustrated in FIG. 5, the processor 1710 may display, on the canvas 210, the image 240 to which the iteration count is applied. In addition, the processor 1710 may display, on the expanded canvas 211, an example in which the image 240 to which the iteration count is applied is expanded.

The Shift function 323 may be described in detail below with reference to FIGS. 11 to 15.

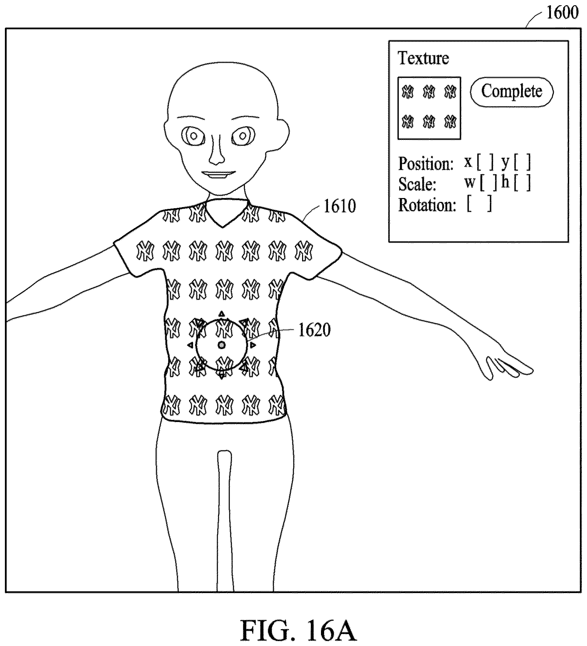

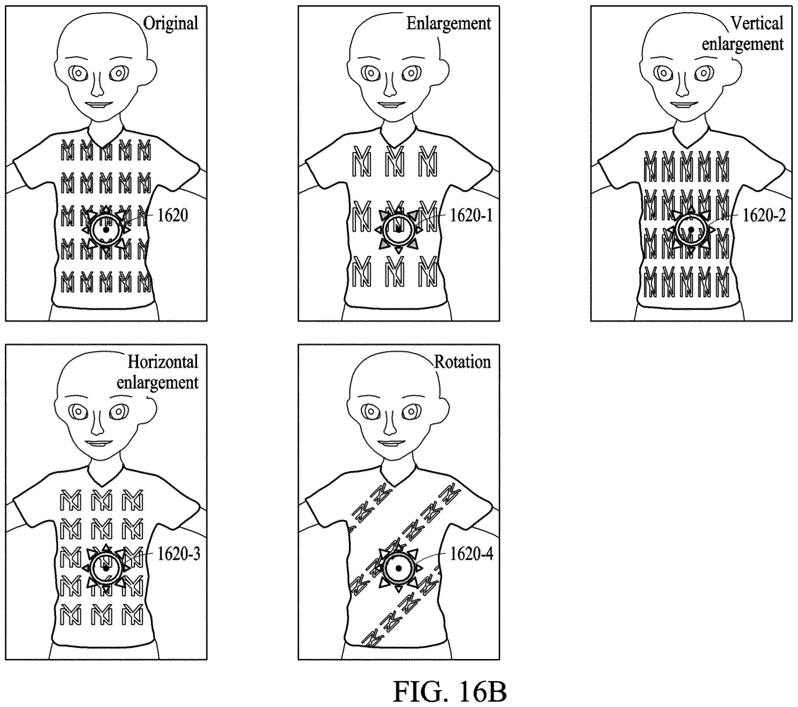

The Transform function 330 may be described in detail below with reference to FIG. 16.

The Color function 340 may include a function for adjusting the color of the image 220 and a function for adjusting the opacity of the image 220. The function for adjusting the color of the image 220 may include a function for adjusting the color by controlling a red green blue (RGB) value. The function for adjusting the opacity may include a function for adjusting the opacity from 0 to 100.

The Layer function 350 may provide a function for selecting a list of images 220 to be included in the canvas 210.

Referring to FIG. 5, the processor 1710 may expand or reduce the size of the image 220 by receiving a user input for a pointer 221 included in a bounding box of the image 220. When the size of the image 220 is modified, the processor 1710 may update an interval parameter based on the modified size of the image 220. Based on the updated interval parameter, the processor 1710 may update and display the image 240, to which the iteration count is applied, on the canvas 210.

According to an embodiment, the processor 1710 may generate the image 240 by forming a repeating pattern based on the location of the image 220. For example, the location of the image 220 on the canvas may be changed according to a user input, and in this case, the repeating pattern may be formed in an x-axis direction and a y-axis direction based on the changed location.

As a result, a phenomenon in which a portion of the image 220 that is repeated is cropped at a boundary of the canvas may occur. The processor 1710 may place the portion of the image 220, the portion being cropped at one boundary of the canvas, at another boundary of the canvas, ensuring the continuity of the repeating pattern between the canvas and the expanded canvas.

The arrangement of the canvas 210, the image 220, the Tile function 320, Transform function 330, the Color function 340, and the Layer function 350 illustrated in the drawings are not limited to the described embodiments.

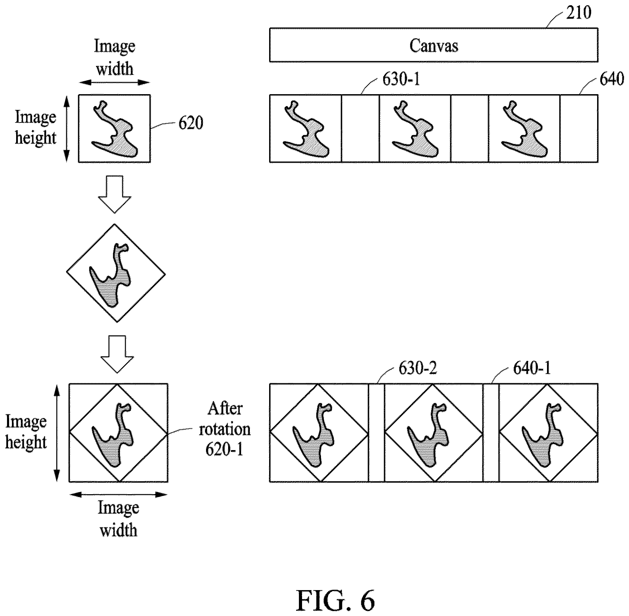

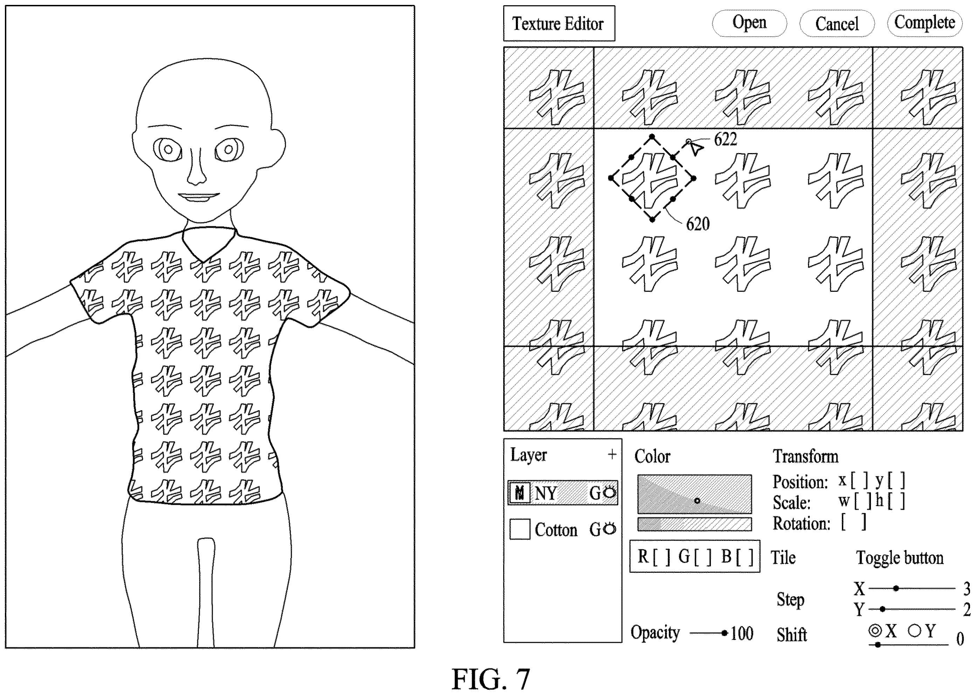

FIGS. 6 and 7 are block diagrams illustrating a method of running a simulation by applying rotation, according to an embodiment.

As illustrated in FIGS. 6 and 7, one or more blocks and a combination thereof may be implemented by a special-purpose hardware-based computer that performs a predetermined function, or a combination of computer instructions and special-purpose hardware.

Referring to FIGS. 6 and 7 together, the processor 1710 may receive a selection input of a user for a rotation pointer 622 included in a bounding box of an image 620 (e.g., the image 220 of FIGS. 2 to 5). The processor 1710 may display a rotated image 620-1 on the canvas 210 based on the selection input of the user for rotating the image 620. The processor 1710 may display an image 640 to which a pre-existing iteration count before rotation is applied as an image 640-1 to which an iteration count after rotation is applied. In this case, the processor 1710 may update the image size of the rotated image 620-1 to a newly defined image size.

For example, it is assumed that the image width and image height of the image 620 are defined by the horizontal length and vertical length of the image, respectively. The processor 1710 may define the image width of the rotated image 620-1 as the difference between the maximum value and the minimum value when the rotated image 620-1 is placed on x-y axis coordinates. Similarly, the processor 1710 may define the image height of the rotated image 620-1 as the difference between the maximum value and the minimum value when the rotated image 620-1 is placed on the x-y axis coordinates. The processor 1710 may update interval parameters 630 based on the image width and image height of the newly defined rotated image 620-1. The processor 1710 may simulate, on the canvas 610, the image 640-1 to which the iteration count after rotation is applied based on an updated interval parameter 630-1.

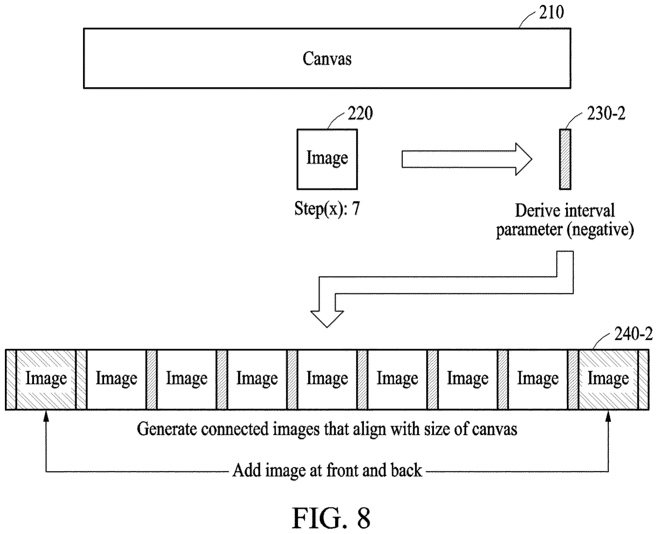

FIGS. 8 to 10 schematically illustrate simulation examples in which a texture image is repeated and generated when an interval parameter is a negative number according to an embodiment.

The description provided with reference to FIGS. 1 to 5 may also apply to the description provided with reference to FIGS. 8 to 10, and any repeated description related thereto is omitted.

As illustrated in FIGS. 8 to 10, one or more blocks and a combination thereof may be implemented by a special-purpose hardware-based computer that performs a predetermined function, or a combination of computer instructions and special-purpose hardware.

Referring to FIG. 8, the processor 1710 may simulate an image 240-2 to which an iteration count is applied when an interval parameter 230-2 is determined to be a negative number. When the interval parameter 230-2 is determined to be a negative number, the phenomenon in which the image 220 included in a tile is cut off at the boundary of the canvas 210 may occur. In this case, the processor 1710 may add one image 220 to both ends of the image 240-2. The processor 1710 may generate the image 240-2 to which an iteration count is applied by adding the image 220 to both ends of the image 240-2.

Alternatively, the processor 1710 may determine the number of images 220 to be added to both ends of the image 240-2 using Equation 3 below. (Natural number) [(Image size / (Image size + interval parameter)] = Number of images to be added

A (natural number) operation refers to a decimal rounding down operation that involves taking only the natural number part of a calculated value. For example, when 2.5, a calculated value before the (natural number) operation, undergoes the (natural number) operation, the number of images to be added is 2.

The size of an image may be one of the width of the image and the height of the image. For example, when determining an interval parameter in a first direction (x-axis direction), the size of the image may represent the width of the image. Similarly, when determining an interval parameter in a second direction (y-axis direction), the size of the image may represent the height of the image.

For example, it is assumed that the width of the canvas 210 is 21 and the width of the image is 4. In this case, the processor 1710 may determine that the interval parameter in the first direction is -1 according to Equation 1 described above. Furthermore, the number of images to be added as calculated according to Equation 3 is 1, and thus, the processor 1710 may add one image 220 to each end of the image 240-2 When the interval parameter in the first direction is determined to be a negative number, the processor 1710 may simulate the image 240-2 to which the iteration count is applied, including overlapping portions between the images 220.

According to another embodiment, when the interval parameter 230-2 is determined to be a positive number, the phenomenon in which the image 220 included in the tile is cut off at the boundary of the canvas 210 may occur. In this case, the processor 1710 may add one image 220 to both ends of the image 240-2. The processor 1710 may generate the image 240-2 to which the iteration count is applied by adding the image 220 to the image 240-2. The processor 1710 may determine the number of images 220 to be added to both ends of the image 240-2 using the equation "(Natural number) [Image size / (Image size + interval parameter)] = Number of images to be added." Here, the (natural number) operation, unlike Equation 3 above, refers to a decimal rounding up operation that involves taking only the natural number part of a calculated value. For example, when 2.5, a calculated value before the (natural number) operation, undergoes the (natural number) operation, the number of images to be added may be 3.

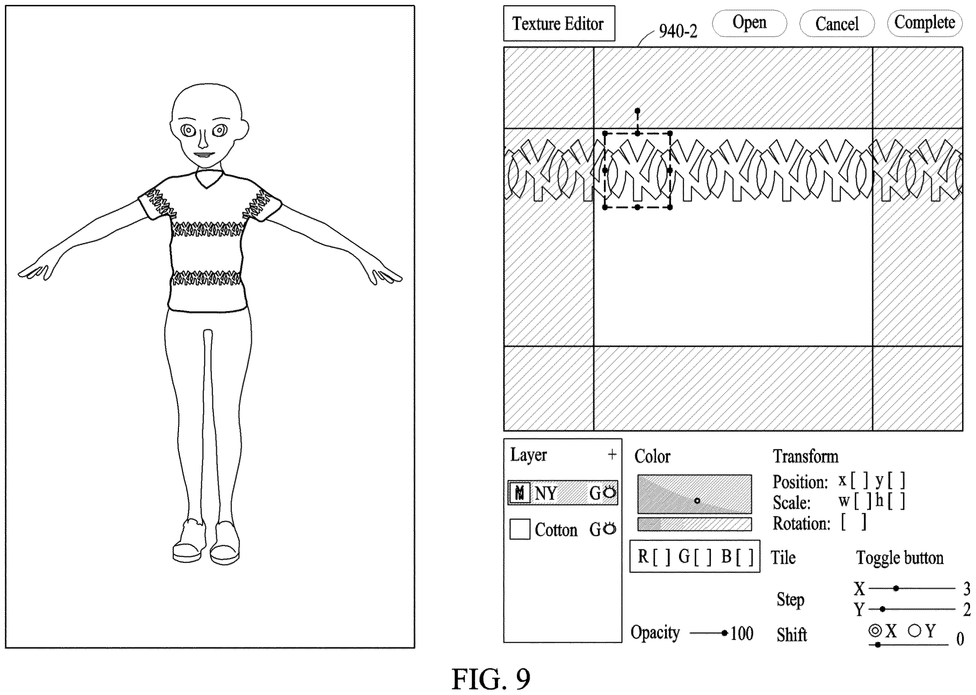

According to an embodiment, the simulation as described with reference to FIG. 9 may be performed when the interval parameter 230-2 is a positive number or negative number. The processor 1710 may adjust the number of images to prevent the phenomenon in which the image 220 included in the tile is cut off at the boundary of the canvas 210 from occurring. This may involve adjusting the number of images 220 by increasing the number of images 220 when the interval parameter 230-2 is a positive number or negative number. The processor 1710 may perform a simulation by increasing the number of images 220 in both directions of an arbitrary image 220. Accordingly, the processor 1710 may provide a user with an experience in which the image 220 included in the tile within the canvas 210 is not cut off.

Referring to FIG. 9, the processor 1710 may simulate an image 940-2 to which the first iteration count in the first direction (x-axis direction) is applied on the canvas 210.

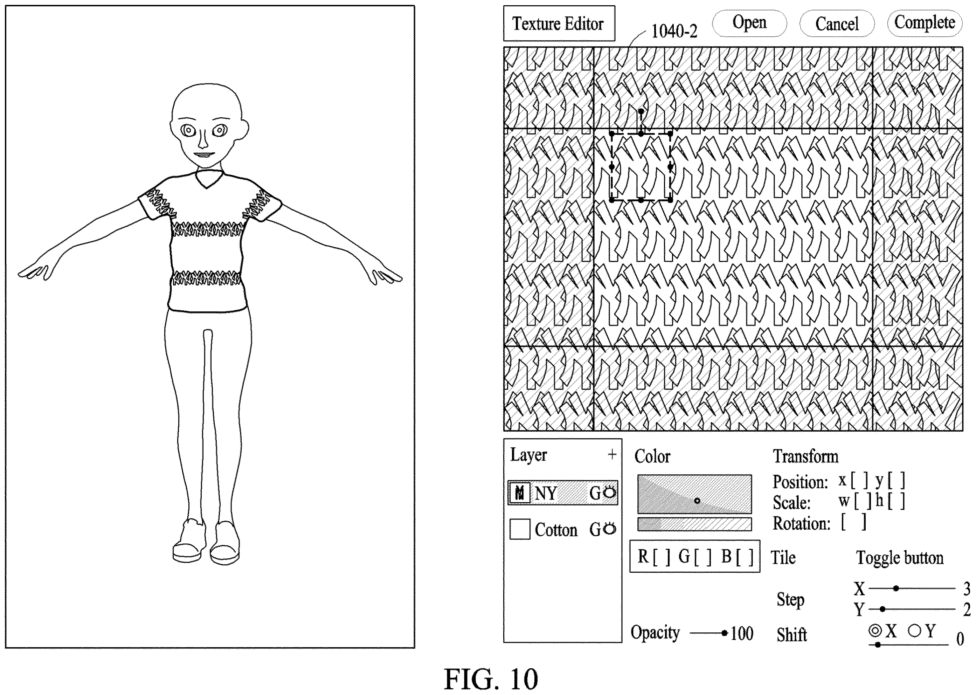

Referring to FIG. 10, the processor 1710 may simulate, on the canvas 210, an image 1040-2 to which the first iteration count in the first direction (x-axis direction) and the second iteration count in the second direction (y-axis direction) are applied.

FIGS. 11 to 15 schematically illustrate simulation examples in which a texture image is repeated and generated by applying a shift according to an embodiment.

The description provided with reference to FIGS. 1 to 5 may apply to FIGS. 11 to 15, and thus, any repeated description related thereto may be omitted.

Referring to FIG. 11, the processor 1710 may receive a first user input (e.g., the Step function 322) and simulate, on the canvas 210, the image 240-3 to which the iteration count is applied by performing four iterations in a first direction (Step(x): 4) and performing four iterations in a second direction (Step(y): 4) on the image 220.

In a texture, the image 220 may be repeated in the first direction or second direction. In this case, repeated unit images may be repeated by forming rows or columns. However, in garment design, while there are cases where repeated unit images are aligned with one another in rows and columns, there may also be cases where unit images are not aligned with one another in rows and columns. Therefore, through shifting, it may be possible to depict rows or columns in a misaligned manner. Shifting may refer to an action of moving a row or column by a predetermined interval in a predetermined direction. For example, first direction shifting may refer to an action of moving, based on a certain row, the location of another row by a predetermined interval in the first direction. In another example, second direction shifting may refer to an action of moving, based on a certain column, the location of another column by a predetermined interval in the second direction. In other words, shifting may involve placing starting points of texture images, which are in different rows or columns, such that the staring points are different, creating a visual effect in which the texture images appear to be interlaced.

Subsequently, the processor 1710 may receive a second user input for shifting a pattern in which the images 220 are repeated. The processor 1710 may determine a shift parameter of the pattern based on the first user input, the second user input, the size of the image, and an interval parameter. The shift parameter of the pattern may include a shift parameter in a first direction (x-axis direction) and a shift parameter in a second direction (y-axis direction).

The second user input may include at least one of a first shift index for adjusting the degree of shifting the repeated pattern in the canvas in the predetermined first direction and a second shift index for adjusting the degree of shifting the repeated pattern in the canvas in the predetermined second direction. In the second user input, the processor 1710 may limit the first shift index to be less than or equal to an iteration count in the second direction and limit the second shift index to be less than or equal to an iteration count in the first direction.

The first shift index may be represented as Shift(x). The second shift index may be represented as Shift(y). The processor 1710 may determine a shift parameter through Equations 4 and 5 below. X-Shift pixel value = ((Image width + internal parameter) / Number of Y-Steps) * X-Shift value Y-Shift pixel value = ((Image height + internal parameter) / Number of X-Steps) * Y-Shift value

In Equations 4 and 5, X-shift may denote a shift in the first direction (x-axis direction), Y-shift may denote a shift in the second direction (y-axis direction), Number of X-steps may denote a first iteration count, Number of Y-steps may denote a second iteration count, X-shift pixel value may denote a first shift parameter, Y-shift pixel value may denote a second shift parameter, X-shift value may denote the first shift index, and Y-shift may denote the second shift index.

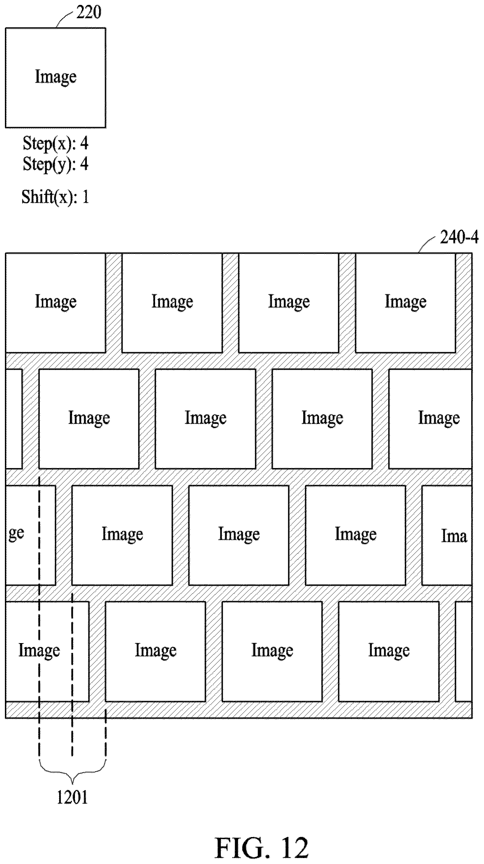

For example, in FIG. 12, it is assumed that the width of the canvas 210 is 20, the width of the image is 3, the first iteration count is 4, and the second iteration count is 4. In this case, the processor 1710 may determine that an interval parameter is 2. It is assumed that after an image to which an iteration count is applied is generated, the processor 1710 receives an input with the first shift index of 1 (Shift(x): 1) according to the second user input. By applying Equation 4, the processor 1710 may determine that the first shift parameter (X-shift pixel value) is 1.5. When the first shift parameter is determined, the processor 1710 may simulate an image 240-4 to which a shift is applied according to a first shift base 1201 based on the first shift parameter. The image 240-4 to which the shift is applied is an image derived from the image 240-3 to which the iteration count is applied by parallel moving a second row by 1.5 in the x-axis direction, a third row by 3 in the x-axis direction, and a fourth row by 4.5.

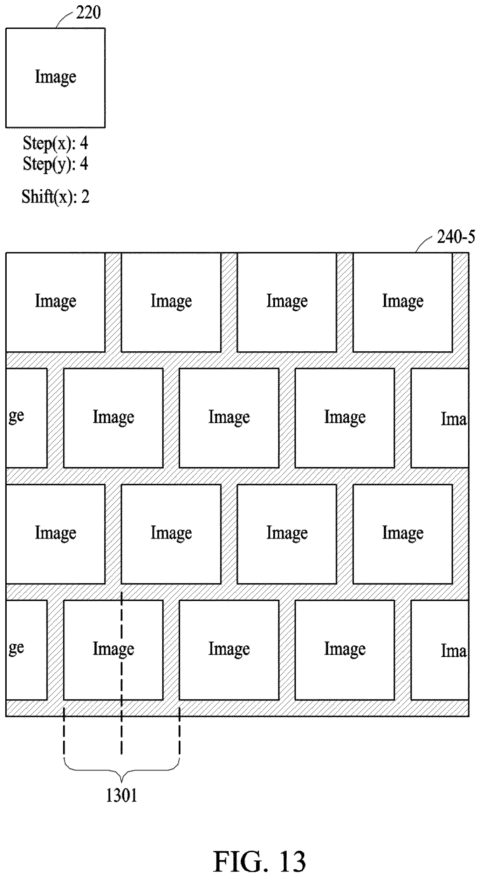

Similarly to FIG. 12, in FIG. 13 as well, for example, it is assumed that the width of the canvas 210 is 20, the width of the image is 3, the first iteration count is 4, and the second iteration count is 4. In this case, the processor 1710 may determine that an interval parameter is 2. It is assumed that after the image to which the iteration count is applied is generated, the processor 1710 receives an input with the first shift index of 2 (Shift(x): 2) according to the second user input. By applying Equation 4, the processor 1710 may determine that the first shift parameter (X-shift pixel value) is 3. When the first shift parameter is determined, the processor 1710 may simulate an image 240-5 to which a shift is applied according to a first shift base 1301 based on the first shift parameter. The image 240-5 to which the shift is applied is an image derived from the image 240-3 to which the iteration count is applied by parallel moving the second row by 3 in the x-axis direction, the third row by 6 in the x-axis direction, and the fourth row by 9.

The above-described examples are provided on the assumption that a shift is a rightward shift in the x-axis direction, but the examples are not limited to the direction described and illustrated in the provided embodiments and drawings, and the shift may also be a leftward shift. Furthermore, the processor 1710 may perform a shift in the second direction (shift in the y-axis direction) by applying the above-described examples in the same manner but in the y-axis direction.

When simulating images (e.g., 240-4 or 240-5) to which shifts are applied using the Shift function 323, the processor 1710 may prevent image discontinuity by adding images to both ends of the images in a corresponding direction (first direction or second direction) based on an iteration count (first iteration count or second iteration count).

Moreover, when the first user input (input for an iteration count) changes in an image to which a shift is applied, the processor 1710 may keep the second user input unchanged if the second user input is less than the first user input, and the processor 1710 may set the second user input to be less than the first user input if the second user input is greater than the first user input.

A policy of automatically decreasing a shift index in response to a corresponding decrease in an iteration count may be set in various ways. For example, if a shift index in the first direction is 4 and the iteration count in the second direction changes from 5 to 3, the processor 1710 may set the shift index in the first direction to 3 since the shift index in the first direction needs to be less than or equal to the iteration count in the second direction. Alternatively, in the same scenario, the processor 1710 may also set the shift index in the first direction to 2, which is a value less than the allowable maximum value of 3.

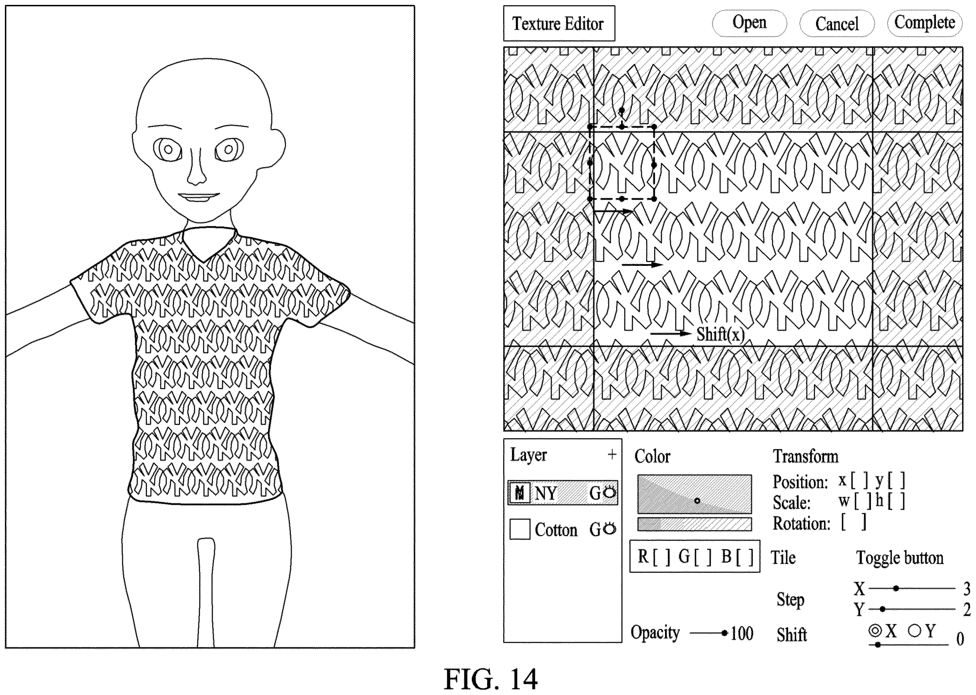

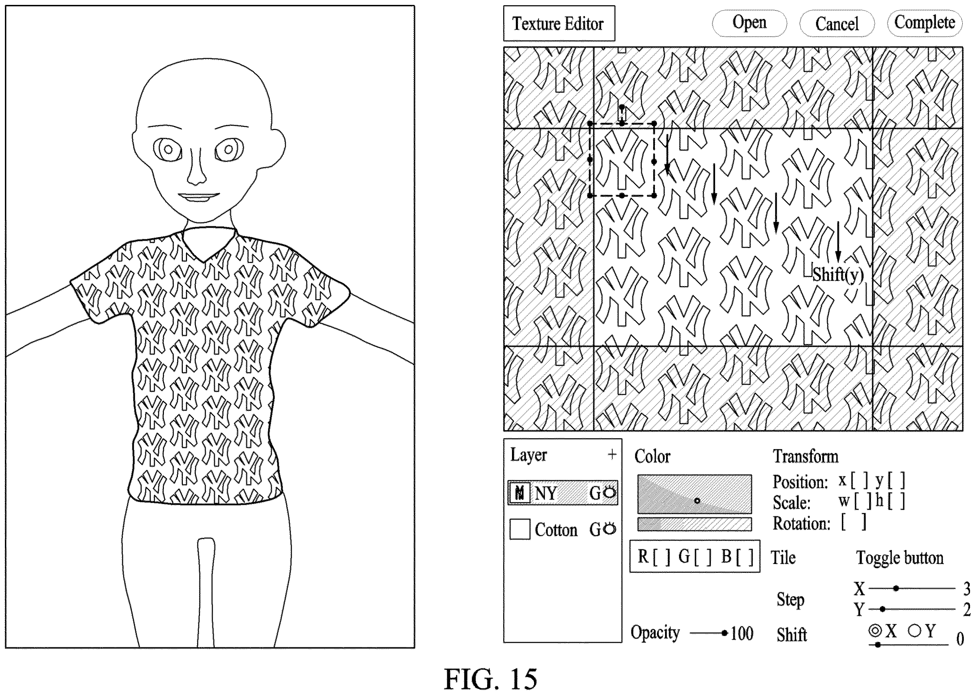

Referring to FIGS. 14 and 15, a simulation apparatus may simulate, on the canvas 210 and the 3D virtual space 300, a result of shifting the image 240 to which the iteration count is applied in response to a selection input of a user for the Shift function 323.

FIGS. 16A and 16B are schematic examples illustrating a texture image transform function according to an embodiment.

The description provided with reference to FIGS. 1 to 5 may apply to FIGS. 16A and 16B, and thus, any repeated description related thereto may be omitted.

A simulation apparatus according to an embodiment may simulate a 3D virtual garment 1610 including a repeating pattern included in a canvas in a 3D virtual space 1600. The simulation apparatus may move, scale, and/or rotate the repeating pattern as a whole included in the canvas through an interfacing object (e.g., Gizmos) 1620. The interfacing object 1620 may include a center point pointer for moving repeating patterns, eight triangular-shaped objects for scaling repeating patterns, and a circular-shaped object for rotating repeating patterns. The eight triangular-shaped objects may include four triangular-shaped objects positioned in a diagonal direction of the interfacing object 1620, which scale width and height in equal ratios, and four triangular-shaped objects positioned on the top, bottom, left, and right sides of the interfacing object 1620, which scale only in a width or height direction. The shapes of the aforementioned objects and pointer are not limited to the described embodiments, and their sizes and shapes may be modified to other suitable shapes.

By rotating the repeating patterns through the circular-shaped object, the interfacing object 1620 may also rotate by the same angle as the rotation applied to the repeating patterns.

More specifically, referring to FIG. 16B, the simulation apparatus may receive a user selection input for a specific garment in a 3D garment simulation. The simulation apparatus may visualize the boundary line of a selected garment (or pattern) to indicate that the garment (or pattern) is selected. Furthermore, the simulation apparatus may display the interfacing object 1620 on a screen for modifying the selected garment (or pattern). The interfacing object 1620 may be represented in various forms depending on modification functions. For example, the interfacing object 1620 may be represented as a resizing interfacing object for resizing in all directions 1620-1, a vertical resizing interfacing object 1620-2, a horizontal resizing interfacing object 1620-3, and a rotation interfacing object 1620-4, as illustrated in FIG. 16B.

The interfacing object for resizing in all directions 1620-1 may be an interfacing object in which north-east, north-west, south-east, and south-west arrows from the interfacing object 1620 are visualized in different colors. A user may use the interfacing object for resizing in all directions 1620-1 to enlarge or reduce the vertical and horizontal sizes of a texture. In this case, unit images included in the texture may be enlarged or reduced while maintaining the ratio of width and height.

The vertical resizing interfacing object 1620-2 may be an interfacing object in which northward and southward arrows from the interfacing object 1620 are visualized in different colors. The user may use the vertical resizing interfacing object 1620-2 to enlarge or reduce the vertical size of the texture. For example, only the height of the unit images included in the texture may increase or decrease while the width of the unit images remains unchanged.

The horizontal resizing interfacing object 1620-3 may be an interfacing object in which westward and eastward arrows from the interfacing object 1620 are visualized in different colors. The user may use the horizontal resizing interfacing object 1620-3 to enlarge or reduce the horizontal size of the texture. For example, only the width of the unit images included in the texture may increase or decrease while the height of the unit images remains unchanged.

The rotation interfacing object 1620-4 may be an interfacing object in which a circular interfacing object from the interfacing object 1620 is visualized in a different color. The user may use the rotation interfacing object 1620-4 to rotate the texture. For example, the simulation apparatus may rotate the unit images included in the texture based on a user input.

FIG. 17 is a block diagram illustrating an electronic apparatus according to an embodiment.

Referring to FIG. 17, an electronic apparatus 1700 may include the processor 1710, a memory 1720, a display 1750, and a communication interface 1730. The memory 1720, the processor 1710, and the communication interface 1730 may be connected to each other via a communication bus 1740.

The memory 1720 may store a variety of information generated in the processing process of the processor 1710 described above. In addition, the memory 1720 may store a variety of data and programs. The memory 1720 may include a volatile memory or a non-volatile memory. The memory 1720 may include a large-capacity storage medium, such as a hard disk, to store a variety of data.

The display 1750 may display at least a portion of a 3D virtual garment provided by the processor 1710. In addition, the display 1750 may display various embodiments of a 2D texture image and a 2D canvas under the control of the processor 1710.

The processor 1710 may be a hardware-implemented apparatus having a circuit that is physically structured to execute desired operations. The desired operations may include, for example, code or instructions in a program. The hardware-implemented apparatus may include, but is not limited to, for example, a microprocessor, a central processing unit (CPU), graphics processing unit (GPU), a processor core, a multi-core processor, a multiprocessor, an application-specific integrated circuit (ASIC), a field-programmable gate array (FPGA), and a neural processing unit (NPU).

The processor 1710 may execute a program. Program code to be executed by the processor 1710 may be stored in the memory 1720.

The embodiments described herein may be implemented using hardware components, software components and/or combinations thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software may be stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. Examples of non-transitory computer-readable media include magnetic media such as hard disks, floppy disks, and magnetic tape; optical media such as CD-ROM discs and DVDs; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter.

Although the embodiments have been described with reference to the limited drawings, one of ordinary skill in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A simulation method for editing a texture of a garment, the simulation method comprising:
displaying a two-dimensional (2D) canvas corresponding to a basic region of the texture;
displaying a 2D texture image on the canvas;
receiving a first user input for repeating and displaying the texture image on the canvas;
determining an interval parameter between texture images based on the first user input, a size of the canvas, and a size of the texture image; and
displaying the texture images on the canvas based on the determined interval parameter.

2. The simulation method of claim 1, further comprising:
applying and displaying a texture based on the canvas onto a 3D garment.

3. The simulation method of claim 1, further comprising:
reflecting and displaying a texture based on the canvas onto a 3D garment in real time.

4. The simulation method of claim 1, wherein the first user input comprises at least one of:
a first iteration count of repeating the texture image within the canvas in a predetermined first direction; and
a second iteration count of repeating the texture image within the canvas in a predetermined second direction.

5. The simulation method of claim 4, wherein the determining of the interval parameter comprises at least one of:
when the first iteration count is input, determining an interval parameter in the first direction based on a size of the canvas in the first direction, a size of the texture image in the first direction, and the first iteration count; and
when the second iteration count is input, determining an interval parameter in the second direction based on a size of the canvas in the second direction, a size of the texture image in the second direction, and the second iteration count.

6. The simulation method of claim 1, wherein the determining of the interval parameter comprises calculating a distance to evenly distribute a plurality of texture images within the canvas based on the first user input.

7. The simulation method of claim 1, further comprising:
determining whether the interval parameter is to be a negative number; and
adding the texture image to both ends of a plurality of texture images based on the first user input based on a determination that the interval parameter is to be a negative number.

8. The simulation method of claim 1, further comprising:
receiving an input for modifying the size of the texture image displayed on the canvas; and
updating the interval parameter based on the modified size.

9. The simulation method of claim 1, further comprising:
receiving an input for rotating the texture image displayed on the canvas;
updating a size of the rotated texture image; and
updating the interval parameter based on the updated size.

10. The simulation method of claim 1, further comprising:
receiving a second user input for shifting a pattern in which the texture images are repeated; and
determining a shift parameter of the pattern based on the first user input, the second user input, the size of the texture image, and the interval parameter.

11. The simulation method of claim 10, wherein the displaying of the texture images on the canvas comprises displaying the texture images on the canvas based on the determined interval parameter and the determined shift parameter.

12. The simulation method of claim 10, wherein the second user input comprises at least one of:
a first shift index for adjusting a degree of shifting a repeating pattern within the canvas in a predetermined first direction; and
a second shift index for adjusting a degree of shifting the repeating pattern within the canvas in a predetermined second direction.

13. The simulation method of claim 12, wherein the determining of the shift parameter comprises at least one of:
when the first shift index is input, determining a shift parameter in the first direction based on an iteration count in the second direction comprised in the first user input, a size of the texture image in the first direction, an interval parameter in the first direction, and the first shift index; and
when the second shift index is input, determining a shift parameter in the second direction based on an iteration count in the first direction comprised in the first user input, a size of the texture image in the second direction, an interval parameter in the second direction, and the second shift index.

14. The simulation method of claim 12, wherein
the first shift index is set less than an iteration count in the second direction comprised in the first user input, and
the second shift index is set less than an iteration count in the first direction comprised in the first user input.

15. The simulation method of claim 1, further comprising:
displaying an interfacing object for moving, scaling, and/or rotating a repeating pattern as a whole comprised in the canvas; and
moving, scaling, and/or rotating the repeating pattern as a whole comprised in the canvas and displaying the repeating pattern in response to a user input through the interfacing object.

16. A non-transitory computer-readable storage medium storing instructions that, when executed by a processor, cause the processor to perform the simulation method of claim 1.

17. A simulation apparatus comprising:
a memory configured to store a computer program for executing a simulation method for editing a texture of a garment;
a display; and
at least one processor configured to:
display a two-dimensional (2D) canvas corresponding to a basic region of the texture and control the display to display a 2D texture image on the canvas;
receive a first user input for repeating and displaying the texture image on the canvas and determine an interval parameter between texture images based on the first user input, a size of the canvas, and a size of the texture image; and
control the display to display the texture images on the canvas based on the determined interval parameter.

18. The simulation apparatus of claim 17, wherein the first user input comprises at least one of:
a first iteration count of repeating the texture image within the canvas in a predetermined first direction; and
a second iteration count of repeating the texture image within the canvas in a predetermined second direction.

19. The simulation apparatus of claim 18, wherein the at least one processor is configured to:
when the first iteration count is input, determine an interval parameter in the first direction based on a size of the canvas in the first direction, a size of the texture image in the first direction, and the first iteration count; and
when the second iteration count is input, determine an interval parameter in the second direction based on a size of the canvas in the second direction, a size of the texture image in the second direction, and the second iteration count.

20. The simulation apparatus of claim 17, wherein the at least one processor is configured to:
receive a second user input for shifting a pattern in which the texture images are repeated and determine a shift parameter of the pattern based on the first user input, the second user input, and the size of the texture image; and
control the display to display the texture images on the canvas based on the determined interval parameter and the determined shift parameter.

21. The simulation apparatus of claim 20, wherein the second user input comprises at least one of:
a first shift index for adjusting a degree of shifting a repeating pattern within the canvas in a predetermined first direction; and
a second shift index for adjusting a degree of shifting the repeating pattern within the canvas in a predetermined second direction.

22. The simulation apparatus of claim 21, wherein the at least one processor is configured to:
when the first shift index is input, determine a shift parameter in the first direction based on an iteration count in the second direction comprised in the first user input, a size of the texture image in the first direction, and the first shift index; and
when the second shift index is input, determine a shift parameter in the second direction based on an iteration count in the first direction comprised in the first user input, a size of the texture image in the second direction, and the second shift index.
